Europäisches Patentamt

European Patent Office

Office européen des brevets

(19)

(11) Veröffentlichungsnummer: **0 180 841**
**B1**

(12) # EUROPÄISCHE PATENTSCHRIFT

(45) Veröffentlichungstag der Patentschrift:
14.06.89

(21) Anmeldenummer: 85113325.6

(22) Anmeldetag: 21.10.85

(51) Int. Cl.⁴: **A 01 N 35/02**, A 01 N 33/12,
C 23 F 11/10 // (A01N35/02,
33:12)

(54) Verfahren zur Verbesserung des Korrosionsverhaltens von Desinfektionsmittellösungen.

(30) Priorität: 29.10.84 DE 3439519

(43) Veröffentlichungstag der Anmeldung:
14.05.86 Patentblatt 86/20

(45) Bekanntmachung des Hinweises auf die Patenterteilung:
14.06.89 Patentblatt 89/24

(84) Benannte Vertragsstaaten:
AT BE CH DE FR GB IT LI NL

(56) Entgegenhaltungen:
BE-A- 882 803
DE-A- 2 141 982
DE-A- 2 415 981

CHEMICAL ABSTRACTS, Band 86, Nr. 8, 21. Februar
1977, Seite 187, Zusammenfassung Nr. 46536h,
Columbus, Ohio, US; & JP - A - 76 115 248 (KURITA
WATER INDUSTRIES, LTD.) 09-10-1976

(73) Patentinhaber: Henkel Kommanditgesellschaft auf
Aktien, Postfach 1100 Henkelstrasse 67,
D-4000 Düsseldorf-Holthausen (DE)

(72) Erfinder: Disch, Karlheinz, Dr., Holbeinstrasse 10,
D-5657 Haan (DE)
Erfinder: Hachmann, Klaus, Dr., Am Eichelkamp 14,
D-4010 Hilden (DE)
Erfinder: Pagel, Jürgen, Ackerstrasse 24,
D-4000 Düsseldorf (DE)

## Beschreibung

Medizinische Instrumente werden unmittelbar nach Gebrauch zur Reinigung und Desinfektion in eine wässrige Lösung von Desinfektionsmitteln gelegt. Die dabei eintretende Abtötung von vegetativen Keimen und Sporen ist abhängig von der Einsatzkonzentration und der Einwirkungszeit der Desinfektionsmittellösung.

Die auf dem Markt befindlichen Desinfektionsmittellösungen enthalten als antimikrobielle Wirkstoffe u.a. Phenolderivate, Aktivchlor abspaltende Substanzen, quaternäre Ammoniumverbindungen oder Aldehyde oder auch Mischungen solcher Wirkstoffe, vorzugsweise solcher aus quaternären Ammoniumverbindungen und Aldehyden, wie sie beispielsweise aus der deutschen Offenlegungsschrift 26 11 957 bekannt sind. Während der Einwirkung dieser Wirkstoffe zum Zwecke der Desinfektion müssen aber gleichzeitig die behandelten Oberflächen, besonders von Instrumenten und Geräten, vor korrodierenden Angriffen geschützt werden. Die Aufgabe bestand also darin, Korrosionseffekte durch Desinfektionsmittel auszuschliessen, ohne die Desinfektionswirkung zu beeinträchtigen.

Aus dem deutschen Patent 21 41 982 sind Desinfektionsmittel bekannt, die eine Kombination mit besonders hoher reinigender und desinfizierender Wirkung aus quaternären Ammoniumverbindungen und Phosphonocarbonsäuren wie 2 Phosphonbutan-1,2,4-tricarbonsäure und ihre Salze enthalten, wobei letztere als Sequestrierungsmittel dienen. Es ist aber z.B. aus Römpps Chemie-Lexikon, 7. Auflage (1974), Seite 2644 weiterhin bekannt, dass 2-Phosphonobutan-1,2,4-tricarbonsäure auch als Basiskomponente für Korrosionsschutzmittel dient.

Dies geht auch aus der japanischen Patentanmeldung 76/6831 hervor, wonach unter anderem noch Nitrilotriessigsäure und Ethylendiamintetraessigsäure zugesetzt werden können.

Es lag daher nahe, 2-Phosphonobutan-1,2,4-tricarbonsäure zu bekannten handelsüblichen Desinfektionsmitteln auf Basis von Aldehyden und quaternären Ammoniumverbindungen zuzusetzen, um so die Korrosionseffekte zu vermeiden. Dabei zeigte sich, dass die Desinfektionsmittelkonfektionierungen in ihrem pH-Wert unter 3,0 abfielen, was zu einer gravierenden Verschlechterung ihrer Stabilität führte. Dies konnte durch einen Zusatz von Natronlauge und eine Einstellung des pH-Wertes auf 3,5 bis 4,0 verhindert werden. Auch bei höheren pH-Werten nahm die Stabilität der konfektionierten Lösungen ab.

Auch andere Sequestrierungsmittel wie die Salze der Aminopolycarbonsäuren führten zu starken Verbesserungen des Korrosionsverhaltens der Desinfektionsmittel, sofern man aus Stabilitätsgründen durch Zugabe von Säuren, z.B. Ameisensäure, für eine Reduzierung des pH-Wertes im Konzentrat auf den Bereich von 3,5 bis 4,0 sorgte.

Es wurde nun gefunden, dass man Korrosionsverhalten von Desinfektionsmittellösungen auf Basis von Aldehyden und quaternären Ammoniumverbindungen synergistisch verbessern kann, wenn man ihnen 0,2 bis 5, vorzugsweise 0,5 bis 2,5 Gew.-%, bezogen auf die gesamte Lösung, an Phosphonocarbonsäuren zusetzt und den pH-Wert der Konzentrate durch Zusatz von 0,2 bis 5, vorzugsweise 0,4 bis 4 Gew.-%, bezogen auf die gesamte Lösung, an Salzen, vorzugsweise den Natriumsalzen, der Aminopolycarbonsäuren auf pH 3,5 bis 4,0 einstellt.

Die Erfindung betrifft daher ein Verfahren zur Verbesserung des Korrosionsverhaltens von Desinfektionsmittellösungen auf Basis von Aldehyden und quaternären Ammoniumverbindungen sowie gegebenenfalls Salzen von Aminopolycarbonsäuren, das dadurch gekennzeichnet ist, dass man den wässrigen oder wässrigen lösungsmittelhaltigen Konfektionierungen der Wirkstoffe Phosphonocarbonsäuren zusetzt und den pH-Wert dieser Konzentrate durch Zusatz von Salzen der Aminopolycarbonsäuren auf pH-Werte von 3,5 bis 4,0 einstellt.

Die Erfindung betrifft ferner wässrige oder wässrige lösungsmittelhaltige Desinfektionsmittelkonfektionierungen auf Basis von Aldehyden und quaternären Ammoniumverbindungen mit einem Gehalt an Phosphonocarbonsäuren und Salzen der Aminopolycarbonsäuren und einen pH-Wert von 3,5 bis 4,0.

In die erfindungsgemässen Mittel können die verschiedenen Mono-oder Dialdehyde mit 1 bis 5 Kohlenstoffatomen, z.B. Formaldehyd, Acetaldehyd, Propionaldehyd, Glyoxal, Isononylaldehyd oder Glutardialdehyd eingesetzt werden. Als besonders wirksame aldehydische Komponenten haben sich jedoch Formaldehyd, Glyoxal und Glutardialdehyd oder auch Gemische dieser Aldehyde erwiesen. Die Mengen der Einzelaldehyde bzw. der Gemische liegen bei 5 bis 50, vorzugsweise bei 10 bis 30 Gew.-%, bezogen auf die gesamte Lösung.

Bei den quaternären Ammoniumverbindungen handelt es sich um die für den Einsatz auf dem Desinfektionsmittelgebiet allgemein bekannten und üblichen Verbindungen, beispielsweise Benzylalkyldimethylammoniumchlorid. Ihre Mengen liegen bei 0,5 bis 10, vorzugsweise bei 1,5 bis 6 Gew.-%, bezogen auf die gesamte Lösung.

Als Phosphonocarbonsäure wird Phosphonobernsteinsäure, vorzugsweise aber 2-Phosphonobutan-1,2,4-tricarbonsäure bzw. ihr Natriumsalz eingesetzt.

Von den Salzen der Aminopolycarbonsäuren werden das Tetranatriumsalz der Ethylendiamintetraessigsäure (EDTA) und bevorzugt das Trinatriumsalz der Nitrilotriessigsäure (NTA) eingesetzt.

Die synergistische Korrosionsinhibierung zeigt sich beim Einsatz von 0,5 bis 5,0, vorzugsweise 1,5 bis 4,0 Gew.-%, bezogen auf die gesamte Lösung, an einer Mischung aus Phosphonocarbonsäure zu den Salzen, vorzugsweise den Natriumsalzen, von Aminopolycarbonsäuren im Gewichtsverhältnis von 1:0,5 bis 1:0,9.

Da die Desinfektionsmittel als Lösungen verarbeitet und angewendet werden, kommen als Lösungsmittel Wasser und übliche organische Lösungsmittel, insbesondere Alkohole wie Ethanol oder Propanol bzw. Glykole und deren Ether die gegebenenfalls mit Wasser vermischt sein können, in Betracht.

Da neben der antimikrobiellen Wirkung der Lösungen auch eine Reinigungswirkung erwünscht ist, können die Mittel nichtionische Tenside enthalten. Als nichtionische Tenside sind Anlagerungsprodukte von 4 bis 40, vorzugsweise 4 bis 20 Mol Ethylendioxid an 1 Mol Fettalkohol, Alkylcyclohexanol, Alkylphenol, Fettsäure, Fettamin, Fettsäureamid oder Alkansulfonamid verwendbar. Besonders zu erwähnen sind die Anlagerungsprodukte von 5 bis 16 Mol Ethylenoxid an Kokos- oder Talgfettalkohole, an Oleylalkohol sowie an Mono-, Dialkylphenole oder an Monoalkylcyclohexanole mit 6 bis 14 C-Atomen in den Alkylresten.

Ausserdem können die Produkte Konfektionierhilfsmittel, viskositätsregulierende Rezepturbestandteile, Duftstoffte und Farbstoffe enthalten.

Die erfindungsgemäss hergestellten Präparate lassen sich auf allen Gebieten der Human- und Veterinärmedizin verwenden und zwar im Hause, in der ärztlichen Praxis, in der Klinik und in Lazaretten, vor allem in der Chirurgie, der Hals-, Nasen- und Ohrenbehandlung, der Zahnheilkunde, der Urologie, der Gynäkologie und der Geburtshilfe.

Es können alle im medizinischen Bereich anfallenden Geräte und Instrumente aus Metall, Glas, Kunststoff, Gummi usw. desinfiziert werden.

Als Beispiele für derartige Geräte seien genannt: Beatmungsgeräte verschiedenster Art, Anästhesiegeräte, Atemmasken, Intubationsgeräte, Atemschläuche, Gummihandschuhe, Endoskopiegeräte wie z.B. Rektoskope, andere optische Geräte, Spekulare usw. Zu den Instrumenten gehören beispielsweise Skalpelle, Scheren, Kornzangen, Klammern, Pinzetten, Nadeln, Injektionsspritzen.

Ausser zur Desinfektion medizinischer Instrumente können die erfindungsgemässen Lösungen selbstverständlich auch als Desinfektions- und Konservierungsmittel auf vielen Gebieten zum Einsatz gelangen, beispielsweise bei der Oberflächen-, Scheuer- oder Sprühdesinfektion von Textilien, Fussböden, Krankenhauseinrichtungen, Schulen, Badeanstalten, öffentlichen Verkehrsmitteln, Industrieanlagen, gewerblichen Betrieben oder in der Stalldesinfektion.

Zur Anwendung werden die erfindungsgemässen Mittel entweder unverdünnt oder als wässrige Lösungen mit vorgeschriebener Anwendungskonzentration eingesetzt. Die Anwendung erfolgt zweckmässigerweise bei Temperaturen von 10 bis 40, vorzugsweise von 15 bis 30 °C. Eine Abtötung der Bakterien tritt bei Raumtemperatur je nach Anwendungskonzentration innerhalb einer Zeitspanne von 15 bis 45 Minuten ein; in der Praxis wird man allerdings die Behandlungsdauer auf etwa eine Stunde ausdehnen. Ist aber eine besonders schnelle Desinfektion erwünscht, so kann man auch konzentriertere Lösungen verarbeiten und/oder höhere Temperaturen anwenden, um dadurch die Behandlungsdauer entsprechend zu verkürzen.

Ein weiterer wesentlicher Vorteil der erfindungsgemäss hergestellten Mittel ist ihre sehr gute Lagerbeständigkeit sowohl in anwendungsfertiger verdünnter Form als auch in Form der Konzentrate bzw. konzentrierten Lösungen. Die kombinierten Bestandteile, nämlich Aldehyde, quaternäre Ammoniumverbindungen, Phosphonocarbonsäuren und Salze der Aminopolycarbonsäuren zeigen auch bei langer Lagerung keinerlei Unverträglichkeitserscheinungen.

Die nachfolgenden Beispiele sollen den Gegenstand der Erfindung erläutern, ohne ihn jedoch darauf zu beschränken.

Beispiele

Die erfindungsgemässe Kombination enthaltenden Konzentrate, aus denen durch Verdünnung mit Wasser oder Lösungsmittel anwendungsfertige Desinfektionsmittel erhalten werden können beispielsweise folgende Zusammensetzungen aufweisen, wobei EO = Ethylenoxid bedeutet und alle Gewichtsangaben sich jeweils auf den Aktivsubstanzgehalt der Rohstoffe beziehen.:

A) Formaldehyd (als 35–40%ige
   wässrige Lösung)                          10      g
   Dimethyldidecylammoniumchlorid                                     3      g
   2-Phosphonobutan-1,2,4-
   tricarbonsäure                            1,0      g
   $Na_4$-Ethylendiamintetraacetat          0,65      g
   Dipropylenglykolmethylether              2,0      g
   Isopropanol                              4,0      g
   Wasser, Duftstoffe          auf          100      g
   pH (unverdünnt)                          3,6

B) Formaldehyd (als 35–40%ige
   wässrige Lösung)                          10      g
   Glutardialdehyd (als 50%ige
   wässrige Lösung)                          10      g
   Benzyldimethyl-$C_{12/14}$-alkyl-
   ammoniumchlorid                            2      g
   2-Phosphonobutan-1,2,4-
   tricarbonsäure                            1,2      g
   $Na_3$-Nitrilotriacetat                   0,7      g
   Nonylphenol . 10 EO-Addukt                  8      g
   60%ige wässrige Isopropa-
   nol-Lösung                  auf          100      g
   pH (unverdünnt)                          3,5

C) Glutardialdehyd (als 50%ige
   wässrige Lösung)                          10      g
   Benzyldimethyl-$C_{12/14}$-alkyl-
   ammoniumchlorid                            6      g
   2-Phosphonobutan-1,2,4-
   tricarbonsäure                            0,8      g
   $Na_3$-Nitrilotriacetat                   0,7      g
   $C_{12/18}$-Fettalkohol . 7 EO-Addukt                                        8      g
   Wasser, Duftstoffe, Farbstoffe
                               auf          100      g
   pH (unverdünnt)                          3,7

D) Formaldehyd (als 35–40%ige
wässrige Lösung)    10   g
Glyoxal (als 40%ig wässrige
Lösung)    12   g
Glutardialdehyd (als 50%ige
wässrige Lösung)    4   g
Benzyldimethyl-C$_{12/14}$-alkyl-
ammoniumchlorid    3   g
Phosphonocarbonsäure: Salz
einer Aminopolycarbonsäure     g
= 1:0,5 – 0,9    0,5–5,0   g
Nonylphenol . 10 EO-Addukt    10
Ethanol    6   g
Wasser, Duftstoff    auf    100   g
pH (unverdünnt)    3,5–4,0

E) Glyoxal (als 40%ige wässrige
Lösung)    11   g
Isononylaldehyd    12   g
Dimethyldidecylammoniumchlorid    4   g
2-Phosphonobutan-1,2,4-
tricarbonsäure    1,9   g
Na$_3$-Nitrilotriacetat    1,5   g
Nonylphenol . 10 EO-Addukt    20   g
Ehtanol : Isopropanol = 1:1    10   g
Wasser    auf    100   g
pH (unverdünnt)    3,6

Prüfung des Korrosionsverhaltens:

Eine in «Die Pharmazie» 38, (1983), Seiten 892–893 veröffentlichte Arbeit von H. Lüdde beschreibt einen einfachen, sehr empfindlichen Korrosionstest, der Korrosionserscheinungen gegebenenfalls schon nach wenigen Stunden durch Verfärbungen und Rostablagerung auf handelsüblichen Nägeln anzeigt. Dieser Nagelkorrosionstest wurde für die Untersuchungen des Korrosionsverhaltens der erfindungsgemäss hergestellten Desinfektionsmittellösungen herangezogen.

Als Basis-Rezeptur diente Beispiel D) mit wechselnden Mengen an 2-Phosphonobutantricarbonsäure und Salzen der Aminopolycarbonsäuren. Die Ergebnisse sind den nachfolgenden Tabellen zu entnehmen.

Die Tabelle 1 lässt erkennen, dass der Einsatz von 2% bekannter Komplexbildner zu einer deutlichen Verbesserung des Korrosionsverhaltens führt. Die pH-Wert-Einstellung auf den für alle Versuche aus Stabilitätsgründen ausgewählten pH-Bereich von 3,5–4,0 des Konzentrates erfolgt je nach Komplexbildner mit Ameisensäure bzw. NaOH.

Die Tabelle 2 zeigt die Wirkung von Inhibitor-Kombinationen, die aus sauren und alkalischen Komplexbildnern derart aufgebaut sind, dass der angestrebte pH-Wert-Bereich von 3,5–4,0 im Konzentrat ohne zusätzliche pH-Wert-Korrektur erreicht wird.

Die Kombinationsmöglichkeiten von PBS und NTA wurden systematisch untersucht. Die Ergebnisse sind in Tabelle 3 zusammengestellt. Sie lässt erkennen, dass das Korrosionsverhalten abhängt von der Gesamtkonzentration der Inhibitoren und dass oberhalb von 1,0% PBS in pH-Wert-gerechten Kombinationen mit NTA sehr gutes Korrosionsverhalten erreicht werden kann. Dieses Korrosionsverhalten der PBS und NTA-Kombinationen ist dabei besser als die Gesamtkonzentration für einen einzelnen Inhibitor, so dass ein echter Synergismus vorliegt.

Tabelle 1
Nagelkorrosionstest mit Rezeptur D) der Beispiele unter Einsatz von verschiedenen Korrosionsinhibitoren (Anwendungskonzentration: 1,5%
Aussehen der Lösungen: Anfangszustand=farblos, klar/nach Standzeit =unverändert

| Korrosionsinhibitoren | Korrosionserscheinungen an Nägeln nach | | | |
| --- | --- | --- | --- | --- |
| | Erste Anzeichen[2] | 24 h | 48 h | 72 h |
| ohne | 4 h | --- | --- | --- |
| 2% NTA[1] = Trinatriumsalz der Amino-tricarbonsäure | 50 h | 0 | 0 | – |
| 2% EDTA[1] = Tetranatriumsalz der Ethylen-diamintetraessigsäure | 50 h | 0 | 0 | -n |
| 2% PBS[1] = 2-Phosphonobutan-1,2,4-tri-carbonsäure | keine | 0 | 0 | 0 |

1) = pH-Werteinstellung mit Ameisensäure bzw. NaOH auf pH 3,5-4,0
2) = Nägel schwarzgrau angelaufen    ---   = starke Korrosion
   --   = mittlere Korrosion
   -   = schwache Korrosion
   0   = keine Korrosion

Tabelle 2
Nagelkorrosionstest mit Rezeptur D) der Beispiele unter Einsatz von Inhibitorkombinationen
(Anwendungskonzentration: 1,5%)

| Korrosionsinhibitor-Kombination[1] | Aussehen der Lösungen nach Standzeit | Korrosionserscheinungen an Nägeln nach | | | |
|---|---|---|---|---|---|
| | | Erste Anzeichen [2] | 24 h | 48 h | 72 h |
| 2,2% PBS + 2% EDTA | farblos, klar | keine | 0 | 0 | 0 |
| 2,2% PBS + 2% NTA | farblos, klar | keine | 0 | 0 | 0 |
| 2% PBS + 1,3% EDTA | farblos, klar | keine | 0 | 0 | 0 |
| 1,5% PBS + 1,1% NTA | farblos, klar | keine | 0 | 0 | 0 |
| 1,0% PBS + 0,7% NTA | farblos, klar | 55 h | 0 | 0 | – |

1) = pH stellt sich im Konzentrat auf 3,4–4,0 ein    – = schwache Korrosion
2) = Nägel schwarzgrau angelaufen    0 = keine Korrosion

Tabelle 3
Nagelkorrosionstest mit Rezeptur D) der Beispiele unter Einsatz von Inhibitorkombinationen
(Anwendungskonzentration: 1,5 %)

| Inhibitor-Gesamt-Konzentration | Korrosionsinhibitor-Kombination | pH-Wert Konzentrat 3,5–4,0 | Korrosionserscheinungen an Nägeln | | | |
|---|---|---|---|---|---|---|
| | | | Erste [x] Anzeichen | 24 h | nach 48 h | 72 h |
| 0,9% | 0,9% NTA | mit HCOOH eingestellt | 12 h | - | -- | --- |
| | 0,9% PBS | mit NaOH eingestellt | 16 h | - | -- | --- |
| | 0,5% PBS + 0,4% NTA | | 14 h | - | -- | --- |
| 1,7% | 1,7% NTA | mit HCOOH eingestellt | 35 h | 0 | - | -- |
| | 1,7% PBS | mit NaOH eingestellt | 42 h | 0 | - | -- |
| | 1,0%PBS + 0,7% NTA | | 55 h | 0 | 0 | - |
| 2,6% | 2,6% NTA | mit HCOOH eingestellt | 45 h | 0 | (-) | (-) |
| | 2,6% PBS | mit NaOH eingestellt | 80 h | 0 | 0 | 0 |
| | 1,5% PBS + 1,1% NTA | | 90 h | 0 | 0 | 0 |
| 3,5% | 3,5% NTA | mit HCOOH eingestellt | - | 0 | (-) | (-) |
| | 3,5% PBS | mit NaOH eingestellt | - | 0 | 0 | 0 |
| | 2,0% PBS + 1,5% NTA | | - | 0 | 0 | 0 |
| 3,8% | 3,8% NTA | mit HCOOH eingestellt | - | 0 | (-) | (-) |
| | 3,8% PBS | mit NaOH eingestellt | - | 0 | 0 | 0 |
| | 2,2% PBS + 1,6% NTA | | - | 0 | 0 | 0 |

+) = Nägel schwarzgrau angelaufen    0 = keine Korrosion
(-) = sehr schwache Korrosion
- = schwache Korrosion
-- = mittlere Korrosion
--- = starke Korrosion

## Patentansprüche

1. Verfahren zur Verbesserung des Korrosionsverhaltens von Desinfektionsmittellösungen auf Basis von Aldehyden und quaternären Ammoniumverbindungen sowie gegebenenfalls Salzen von Aminopolycarbonsäuren, dadurch gekennzeichnet, dass man den wässrigen oder wässrigen lösungsmittelhaltigen Lösungen der Wirkstoffe Phosphonocarbonsäuren zusetzt und den pH-Wert der Lösungen durch Zusatz von Salzen der Aminopolycarbonsäuren auf pH-Werte von 3,5–4,0 einstellt.

2. Verfahren nach Anspruch 1, dadurch gekennzeichnet, dass man 0,5 bis 5,0, vorzugsweise 1,5 bis 4,0 Gew.-%, bezogen auf die gesamte Lösung, an einer Mischung aus Phosphonocarbonsäuren und Salzen vorzugsweise den Natriumsalzen von Aminopolycarbonsäuren einsetzt.

3. Verfahren nach einem der Ansprüche 1 und 2, dadurch gekennzeichnet, dass man die Phosphonocarbonsäuren und die Salze der Aminopolycarbonsäuren im Gewichtsverhältnis von 1:0,5 bis 1:0,9 einsetzt.

4. Verfahren nach einem der Ansprüche 1 bis 3, dadurch gekennzeichnet, dass man den Lösungen 0,2 bis 5, vorzugsweise 0,5 bis 2,5 Gew.-%, bezogen auf die gesamte Lösung, an Phosphonocarbonsäuren zusetzt.

5. Verfahren nach einem der Ansprüche 1 bis 4, dadurch gekennzeichnet, dass man als Phosphonocarbonsäuren Phosphonobernsteinsäure oder vorzugsweise 2-Phosphonobutan-1,2,4-tricarbonsäure zusetzt.

6. Verfahren nach einem der Ansprüche 1 bis 5, dadurch gekennzeichnet, dass man den pH-Wert durch Zusatz von 0,2 bis 5, vorzugsweise 0,4 bis 4 Gew.-%, bezogen auf die gesamte Lösung, an Salzen, vorzugsweise den Natriumsalzen der Aminopolycarbonsäuren einstellt.

7. Verfahren nach einem der Ansprüche 1 bis 6, dadurch gekennzeichnet, dass man den pH-Wert durch Zusatz von Tetranatriummethylendiamintetraacetat, vorzugsweise von Trinatriumnitrilotriacetat einstellt.

8. Wässrige oder wässrige lösungsmittelhaltige Desinfektionsmittellösungen auf Basis von Aldehyden und quaternären Ammoniumverbindungen mit einem Gehalt an Phosphonocarbonsäuren und Salzen der Aminopolycarbonsäuren und einem pH-Wert von 3,5 bis 4,0, erhalten nach dem Verfahren der Ansprüche 1 bis 7.

## Revendications

1. Procédé pour améliorer le comportement à la corrosion de solutions d'agents désinfectants à base d'aldéhydes et de composés d'ammonium quaternaire, ainsi que, le cas échéant, de sels d'acides aminopolycarboxyliques, caractérisé en ce qu'on ajoute aux solutions aqueuses ou aux solutions aqueuses contenant des solvants des principes actifs acides phosphonocarboxyliques et on règle le pH des solutions par addition de sels de acides aminopolycarboxyliques aux pH de 3,5–4,0.

2. Procédé selon la revendication 1, caractérisé en ce qu'on utilise 0,5 à 5,0, de préférence 1,5 à 4,0% en poids, rapporté à la totalité de la solution, d'un mélange d'acides phosphonocarboxyliques et de sels, de préférence de sels de sodium, d'acides aminopolycarboxyliques.

3. Procédé selon l'une des revendications 1 et 2, caractérisé en ce qu'on utilise les acides phosphonocarboxyliques et les sels d'acides aminopolycarboxyliques dans le rapport pondéral de 1:0,5 à 1:0,9.

4. Procédé selon l'une des revendications 1 à 3, caractérisé en ce qu'on ajoute aux solutions 0,2 à 5, de préférence 0,5 à 2,5% en poids d'acides phosphonocarboxyliques, rapporté à la totalité de la solution.

5. Procédé selon l'une des revendications 1 à 4, caractérisé en ce qu'on ajoute comme acide phosphonocarboxylique de l'acide phosphonosuccinique ou de préférence de l'acide 2-phosphonobutane-1,2,4-tricarboxylique.

6. Procédé selon l'une des revendications 1 à 5, caractérisé en ce qu'on règle le pH par addition de 0,2 à 5, de préférence 0,4 à 4% en poids, rapporté à la totalité de la solution, de sels, de préférence de sels sodiques, des acides aminopolycarboxyliques.

7. Procédé selon l'une des revendications 1 à 6, caractérisé en ce qu'on règle le pH par addition d'éthylènediaminetétracétate-tétrasodique, de préférence de nitrilotriacétate trisodique.

8. Solutions d'agents désinfectants aqueuses ou aqueuses contenant des solvants à base d'aldéhyde et de composés d'ammonium quaternaire contenant des acides phosphonocarboxyliques et des sels d'acides aminopolycarboxyliques, de pH compris entre 3,5 et 4,0, obtenus selon le procédé des revendications 1 à 7.

## Claims

1. A process for improving the corrosion behavior of disinfectant solutions based on aldehydes and quaternary ammonium compounds and, optionally, salts of aminopolycarboxylic acids, characterized in that phosphonocarboxylic acids are added to the aqueous or aqueous solvent-containing solutions of the active agents and the pH-value of the solutions is adjusted to pH 3.5–4.0 by addition of salts of aminopolycarboxylic acids.

2. A process as claimed in Claim 1, characterized in that from 0.5 to 5.0% by weight and preferably from 1.5 to 4.0% by weight, based on the solution as a whole, of a mixture of phosphonocarboxylic acids and salts, preferably the sodium salts, of aminopolycarboxylic acids is used.

3. A process as claimed in Claim 1 or 2, characterized in that the phosphonocarboxylic acids and the salts of aminopolycarboxylic acids are used in a ratio by weight of from 1:0.5 to 1:0.9.

4. A process as claimed in any of Claims 1 to 3, characterized in that from 0.2 to 5% by weight and preferably from 0.5 to 2.5% by weight, based on the solution as a whole, of phosphonocarboxylic acids is added to the solutions.

5. A process as claimed in any of Claims 1 to 4, characterized in that phosphonosuccinic acid, preferably 2-phosphonobutane-1,2,4-tricarboxylic acid, is used as the phosphonocarboxylic acid.

6. A process as claimed in any of Claims 1 to 5, characterized in that the pH-value is adjusted by addition of from 0.2 to 5% by weight and preferably from 0.4 to 4% by weight, based on the solution as a whole, of salts, preferably the sodium salts, of aminopolycarboxylic acids.

7. A process as claimed in any of Claims 1 to 6, characterized in that the pH-value is adjusted by addition of tetrasodium ethylene diamine tetracetate and preferably by addition of trisodium nitrilotriacetate.

8. Aqueous or aqueous solvent-containing disinfectant solutions based on aldehydes and quaternary ammonium compounds containing phosphonocarboxylic acids and salts of aminopolycarboxylic acids and having a pH-value of from 3.5 to 4.0, obtained by the process claimed in Claims 1 to 7.